# EUROPEAN PATENT SPECIFICATION

(11) **EP 4 224 261 B1**
(45) Date of publication and mention of the grant of the patent: **03.12.2025**
(21) Application number: 21874769.9
(22) Date of filing: 02.03.2021
(51) Int. Cl.: G05B 23/02, G06F 21/56, G06F 21/57, G06F 21/64, G06F 21/55

(54) **INSPECTION DEVICE, INSPECTION METHOD, AND PROGRAM**
INSPEKTIONSVORRICHTUNG, INSPEKTIONSVERFAHREN UND PROGRAMM
DISPOSITIF D'INSPECTION, PROCÉDÉ D'INSPECTION ET PROGRAMME

(30) Priority: 30.09.2020 JP 2020165217
(43) Date of publication of application: 09.08.2023
(73) Proprietor: OMRON Corporation, Kyoto 600-8530 (JP)
(72) Inventor: TANIGUCHI, Taku, Kyoto-shi, Kyoto 600-8530 (JP)
(74) Representative: Mewburn Ellis LLP
(86) International application number: PCT/JP2021/007825
(87) International publication number: WO 2022/070461

(56) References cited:
- WO-A1-2020/175042
- WO-A1-2020/175042
- JP-A- 2000 047 574
- JP-A- 2008 084 266
- JP-A- 2020 149 528
- JP-B2- 5 249 736

## Description

### TECHNICAL FIELD

The present disclosure relates to a device inspecting an object, and more particularly, to a device capable of inspecting the object and taking measures against a security event.

### BACKGROUND ART

In order to ensure reliability of information about inspection, for example, PTL 1 (Japanese Patent Laying-Open No. 2000-47574) discloses a technique of 'A reference numeral 14 denotes a portable terminal such as a PHS, and outputs directly ground data obtained from a ground investigation device to a server 1 through the Internet 13 while the ground investigation device conducts a ground investigation of a site that is a construction site (paragraph 0024). The server 9 performs a virus inspection on data input through the Internet 13 (paragraphs 0020 and 0027)'.

### CITATION LIST

### PATENT LITERATURE

PTL 1: Japanese Patent Laying-Open No. 2000-47574

### SUMMARY OF INVENTION

### TECHNICAL PROBLEM

A control system of factory automation (FA) provided at a production site is more likely to be exposed to a threat of a cyberattack. More specifically, in recent years, because a standard protocol such as Ethernet (registered trademark) is used for communication between control systems, or because a case where a general-purpose operating system (OS) is used for the control systems increases, the control systems are also threatened by a general threat of information security. When the control system is subjected to the cyberattack, and for example, when an inspection program inspecting an object such as a product includes a computer virus, product inspection cannot be appropriately performed, and a risk such as shipment of a defective product is generated. Accordingly, in order to prevent such the risk, there is a demand for taking a security countermeasure for information about the inspection of the object at the production site.

However, because PTL 1 merely describes a technique for performing a virus check on ground inspection data acquired from the ground investigation device, so that a demand for the security countermeasure in the case of inspection of the object cannot be met.

JP 5 249736 B2, JP 2000 047574 A and WO 2020/175042 A1 disclose further prior art.

An object of the present disclosure is to provide an inspection device, an inspection method, and a program capable of implementing the security countermeasure for information about the inspection of the object.

### SOLUTION TO PROBLEM

An inspection device according to the present disclosure is an inspection device that inspects an object, the inspection device includes: an object inspection unit that inspects the object by executing an inspection program; a storage that stores various types of information including related information related to an inspection of the object including the inspection program; a security inspection unit that inspects a security event that is possible to occur in the information by executing a security countermeasure program on the information in the storage; and an output unit that outputs target inspection information including an inspection result of the object from the object inspection unit and security inspection information including an inspection result of the security event from the security inspection unit in linkage with an inspection time at which each inspection is performed.

According to the above disclosure, the inspection device includes the storage that stores the information related to the inspection of the object including the inspection program, and the security countermeasure program is executed on the information in the storage to inspect the presence or absence of the security event that is possible to occur in the information. Therefore, the inspection device can provide the environment in which the security countermeasure is performed on the information related to the inspection of the object.

In addition, the inspection device provides information that enables the output unit to specify the target inspection information linked with the corresponding inspection time during the period in which the security event occurs and to specify the target inspection information linked with the corresponding inspection time during the period in which the security event does not occur. Thus, the inspection device can also provide information evaluating validity (reliability) of the target inspection information based on the linked inspection time as the security countermeasure of the information related to the inspection of the object.

In the above disclosure, the output unit includes a first linkage unit that stores the target inspection information and the security inspection information in linkage with each other based on the inspection time linked with each of the target inspection information and the security inspection information.

According to the above disclosure, with respect to the target inspection information, the validity (reliability) described above can be indicated by the security inspection information linked with the target inspection information.

In the above disclosure, the inspection device further includes a communication interface configured to communicate with an external information processing device, in which the output unit includes a transfer unit that transfers target inspection information including an inspection result of the object from the object inspection unit and security inspection information including an inspection result of a computer virus from the security inspection unit to the external information processing device through the communication interface while linking the inspection time of each of the target inspection information and the security inspection information with each other, and the information processing device includes a second linkage unit that stores the target inspection information and the security inspection information that are transferred by the transfer unit in linkage with each other based on an inspection time linked with each of the target inspection information and the security inspection information.

According to the above disclosure, in the external information processing device, the validity (reliability) described above can be indicated by the security inspection information linked with the target inspection information for the target inspection information.

In the above disclosure, in the linkage, at least one piece of the target inspection information linked with an inspection time corresponding to a predetermined period going back from an inspection time linked with the security inspection information is linked with the security inspection information.

According to the above disclosure, the object inspection information on one or a plurality of objects inspected in the predetermined period going back from the inspection time of the security event can be linked with the security inspection information including the inspection result of the security event.

In the above disclosure, the predetermined period corresponds to an interval at which the security inspection unit inspects the security event.

According to the above disclosure, the linkage information for one or a plurality of pieces of object inspection information can be obtained at each interval at which the security inspection unit inspects the security event. That is, for each interval, the object inspection information including the inspection result of one or a plurality of objects inspected in the interval period can be linked with the security inspection information indicating the inspection result of the security event in the interval.

In the above disclosure, the security countermeasure program is stored in a storage medium detachably attached to the inspection device.

According to this disclosure, the period at which the storage medium is attached to the inspection device can be limited to the period when the security countermeasure program is executed, the probability that the security countermeasure program stored in the storage medium is affected by the security event can be reduced.

In the above disclosure, the inspection device outputs a plurality of pieces of linkage information including the target inspection information and the security inspection information linked with the target inspection information based on the inspection time in time series according to at least one of the inspection times of both the target inspection information and the security inspection information.

According to this disclosure, the validity of the target inspection information described above can be notified to a user in time series.

In the above disclosure, the security countermeasure program includes a program that performs processing corresponding to the security event, and the security inspection unit executes the program that performs the processing corresponding to the security event when the security event of the information is detected.

According to this disclosure, even when the security event is detected for the information about the inspection of the object including the inspection program, handling processing can be performed on the security event. Thereafter, the inspection of the object can be performed using the inspection program that has dealt with the security event, and the validity of the acquired target inspection information can be ensured.

In the above disclosure, the inspection program includes a program inspecting the object based on a captured image of the object.

According to this disclosure, the security event that is possible to occur in the program inspecting the object based on a captured image of the object can be inspected.

In the above disclosure, the inspection device executes the security countermeasure program at a predetermined period.

According to this disclosure, the security countermeasure program is executed only at a predetermined time, so that a resource executing the inspection program inspecting the object can be secured even when the inspection program is executed in parallel with the security countermeasure program in the inspection device.

In the above disclosure, the inspection device executes the security countermeasure program in parallel with the inspection program for the object during operation.

According to this disclosure, the inspection program inspecting the object in the inspection device is executed in parallel with the security countermeasure program, so that a tact time for the inspection of the object can be maintained even when the security countermeasure program is executed.

In the above disclosure, a priority of execution of the inspection program for the object is higher than a priority of execution of the security countermeasure program.

According to this disclosure, the inspection program can be preferentially acquired than the security inspection information even when the inspection program of the object is executed in parallel with the security countermeasure program. As a result, the tact time for the object inspection can be maintained even when the security countermeasure program is executed in parallel with the inspection program of the object.

A method according to the present disclosure for inspecting an object, the method includes: executing an inspection program that inspects the object; executing a security countermeasure program that inspects a security event that is possible to occur in information stored in a storage unit storing various types of information including related information related to inspection of the object including the inspection program; and outputting target inspection information including an inspection result of the object and security inspection information including an inspection result of a security event of the information in linkage with an inspection time at which each inspection is performed.

According to the above disclosure, the presence or absence of the security event that is possible to occur in the information can be inspected by executing the security countermeasure program on the information in the storage related to the inspection of the object including the inspection program. Accordingly, an environment in which the security countermeasure is implemented for the information related to the inspection of the object when this method is implemented.

In the outputting, the target inspection information linked with the corresponding inspection time during the period in which the security event occurs can be specified and the target inspection information linked with the corresponding inspection time during the period in which the security event does not occur can be specified. Thus, by performing the method, the information evaluating the validity (reliability) of the target inspection information based on the linked inspection time can be provided for the security countermeasure of the information about the inspection of the object.

A program according to the present disclosure that, when executed by at least one processor, causes the at least one processor to perform: executing an inspection program that inspects an object; executing a security countermeasure program that inspects a security event that is possible to occur in information stored in a storage unit storing various types of information including related information related to inspection of the object including the inspection program; and outputting target inspection information including an inspection result of the object and security inspection information including an inspection result of a security event of the information in linkage with an inspection time at which each inspection is performed.

According to the above disclosure, the presence or absence of the security event that is possible to occur in the information can be inspected by executing the security countermeasure program on the information in the storage related to the inspection of the object including the inspection program. Consequently, according to this disclosure, an environment for implementing the security countermeasure for information related to the inspection of the object can be provided.

In the outputting, the target inspection information linked with the corresponding inspection time during the period in which the security event occurs can be specified and the target inspection information linked with the corresponding inspection time during the period in which the security event does not occur can be specified. Thus, by performing the method, the information evaluating the validity (reliability) of the target inspection information based on the linked inspection time can be provided for the security countermeasure of the information about the inspection of the object.

### ADVANTAGEOUS EFFECTS OF INVENTION

According to this disclosure, the security countermeasure for the information about the inspection of the object can be implemented.

### BRIEF DESCRIPTION OF DRAWINGS

Fig. 1 is a view schematically illustrating a configuration of an inspection device 10 according to an embodiment.
Fig. 2 is a view schematically illustrating a configuration of a control system 1 of the embodiment.
Fig. 3 is a view schematically illustrating a hardware configuration of the inspection device 10 of the embodiment.
Fig. 4 is a view schematically illustrating an example of information stored in an HDD 13 in Fig. 3.
Fig. 5 is a view illustrating a functional configuration example of the inspection device 10 of the embodiment.
Fig. 6 is a flowchart illustrating object inspection processing of the embodiment.
Fig. 7 is a flowchart illustrating security inspection processing of the embodiment.
Fig. 8 is a view illustrating an execution time of a security countermeasure program 71 of the embodiment in linkage with an inspection time of a workpiece 42.
Fig. 9 is a view illustrating an example of a target inspection file 120 of the embodiment.
Fig. 10 is a view illustrating an example of security inspection information 134 of the embodiment.
Fig. 11 is a view illustrating another example of the security inspection information 134 of the embodiment.
Fig. 12 is a view illustrating an example of a security inspection file of the embodiment.
Fig. 13 is a view illustrating an example of an inspection information DB 138 of the embodiment.
Fig. 14 is a view illustrating another example of the inspection information DB 138 of the embodiment.
Fig. 15 is a view illustrating validity of target inspection information 133 in linkage with an execution period of the embodiment.
Fig. 16 is a view illustrating a configuration example of a server 50 of the embodiment.

### DESCRIPTION OF EMBODIMENT

With reference to the drawings, an embodiment will be described below. In the following description, the same components and constituents are denoted by the same reference numerals. Those names and functions are the same. Accordingly, the detailed description thereof will not be repeated.

### <A. Application example>

An example of a scene to which the present invention is applied will be described. An inspection device 10 according to an embodiment implements a security countermeasure for a security event with respect to information about inspection of an object.

In the embodiment, the "security event" includes all events that can be related to the event, in addition to any event that interferes with a normal operation of inspection device 10. In the embodiment, for example, intrusion of malware into inspection device 10 or falsification of data is exemplified as the security event, but the security event is not limited thereto. The "malware" is malicious software produced with the intention of illegally and injurious operation of a target (program or device). Examples of the malware include a computer virus, a worm, and Trojan horse. A security countermeasure program 71 of the embodiment is a concept that can be applied to general security events including the intrusion of the malware or the falsification of the data. Hereinafter, a case where security countermeasure program 71 is applied to the security event such as the intrusion of the computer virus as an example of the malware will be described as an example, and detection details of the falsification of the data will be described later.

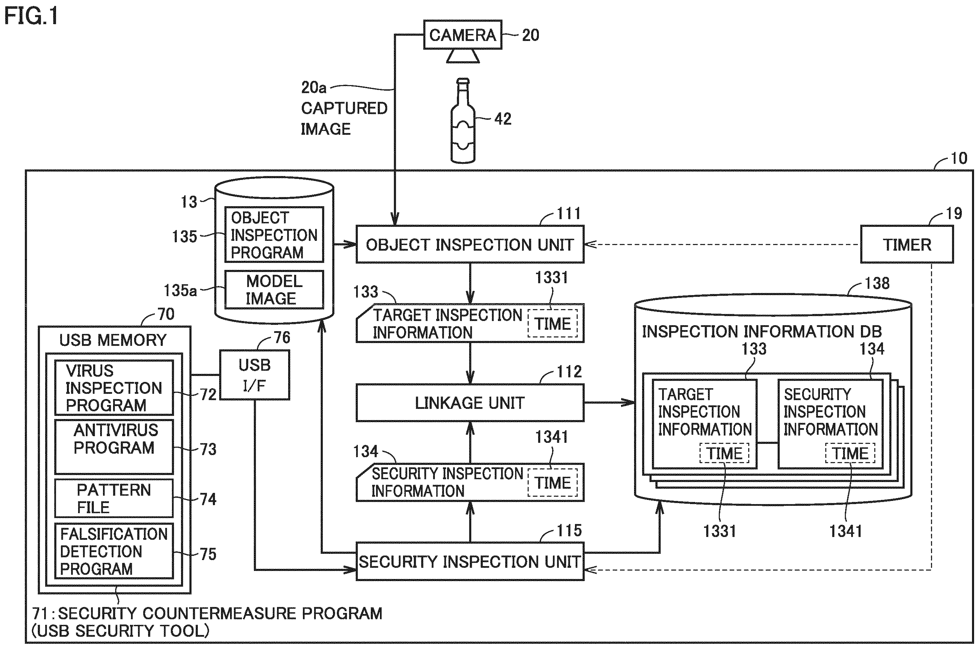

Fig. 1 is a view schematically illustrating a configuration of inspection device 10 that inspect the object of the embodiment. With reference to Fig. 1, inspection device 10 can be applied to a production line of a workpiece 42. Inspection device 10 inspects workpiece 42 using a captured image 20a output by a camera 20 capturing workpiece 42.

More specifically, inspection device 10 includes an object inspection unit 111 that inspects workpiece 42 based on captured image 20a and output target inspection information 133 indicating an inspection result, a linkage unit 112 that links target inspection information 133 from object inspection unit 111 and security inspection information 134 output from a security inspection unit 115 described later with each other based on times 1331, 1341 at which each inspection is performed and stores the linked information in an inspection information database (DB) 138, and a timer 19 that measures times 1331, 1341. Object inspection unit 111 is implemented by executing an object inspection program 135 stored in a hard disk drive (HDD) 13. For example, object inspection unit 111 inspects workpiece 42 by collating captured image 20a of workpiece 42 with a model image 135a stored in HDD 13 using pattern matching, and outputs target inspection information 133 indicating an inspection result including a collation result.

Inspection device 10 further includes a universal serial bus interface (USB I/F) 76 to which a USB memory 70 is detachably attached. USB memory 70 stores security countermeasure program 71. The USB I/F 76 accesses (reads/writes) mounted USB memory 70. A CPU 11 executes security countermeasure program 71 of USB memory 70 through USB I/F 76 as security inspection unit 115 to inspect the computer virus for the information related to the inspection of workpiece 42, and outputs security inspection information 134. For example, the information about the inspection of workpiece 42 includes the pieces of information about object inspection program 135, model image 135a, and inspection information DB 138 stored in HDD 13. Security inspection information 134 includes at least information indicating whether the computer virus is detected. In the embodiment, security countermeasure program 71 constitutes a USB security tool provided to inspection device 10 by the USB memory.

In the embodiment, the external storage medium providing security countermeasure program 71 is not limited to USB memory 70, but for example, may be another type of storage medium such as an external storage (an SD card or the like). Furthermore, security countermeasure program 71 may be provided by being installed in a storage medium (for example, HDD 13) built in the inspection device 10.

Inspection device 10 executes object inspection program 135 and security countermeasure program 71 in parallel. Thus, along with the inspection of workpiece 42, the security countermeasure can be implemented for the information about the inspection of workpiece 42.

Object inspection unit 111 links the inspection time with target inspection information 133 by including the time at which object inspection program 135 is executed, namely, time 1331 at which the object inspection is executed in target inspection information 133 acquired by executing object inspection program 135. In addition, security inspection unit 115 links security inspection information 134 with the inspection time by including the time at which security countermeasure program 71 is executed, namely, time 1341 at which the computer virus inspection is performed in security inspection information 134 acquired by executing security countermeasure program 71.

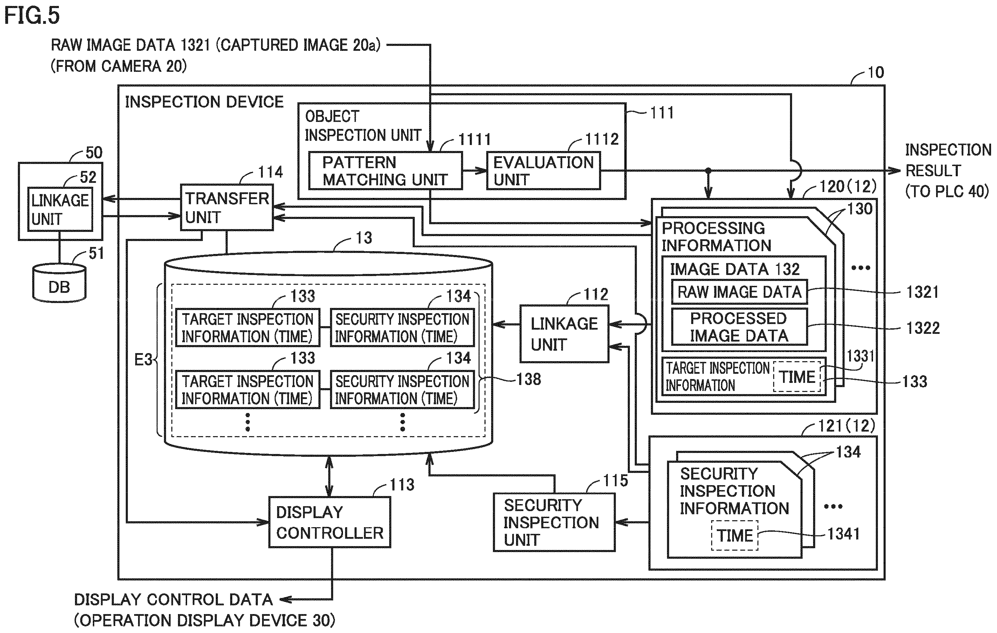

When object inspection program 135 and security countermeasure program 71 are executed in parallel, inspection device 10 includes an output unit that outputs target inspection information 133 from object inspection unit 111 and security inspection information 134 from security inspection unit 115 in link with inspection times 1331, 1341 at which each inspection is performed. The output unit can include linkage unit 112 and a transfer unit 114 (Fig. 5) described later. Linkage unit 112 links target inspection information 133 with security inspection information 134 based on times 1331, 1341 at which each inspection is performed, and stores the linkage information in inspection information DB 138. Accordingly, in inspection information DB 138, target inspection information 133 having time 1331 linked with time 1341 can be specified based on time 1341 at which the computer virus is detected.

As described above, in inspection information DB 138, times 1331, 1341 at which each inspection is performed are linked with target inspection information 133 and security inspection information 134. Thus, inspection device 10 can manage target inspection information 133 in a mode capable of providing information indicating whether target inspection information 133 is information acquired at the time when the computer virus is detected, namely, information indicating validity of the inspection result of the object based on linked times 1331, 1341. Accordingly, inspection device 10 can implement the security countermeasure for the information about the inspection of the object.

More specifically, security countermeasure program 71 includes a pattern file 74 for computer virus testing, a virus inspection program 72 inspecting the computer virus of information using pattern file 74, antivirus program 73 corresponding to a vaccine program removing the computer virus detected by virus inspection program 72, and a falsification detection program 75. The presence or absence of data falsification of inspection information DB 138 described later is detected by executing falsification detection program 75.

Antivirus program 73 is an example of a program that performs countermeasure processing corresponding to a security event (invasion of the computer virus or the like). For example, the countermeasure processing can include processing for canceling the security event to maintain the normal operation of inspection device 10 or being restored to the normal operation. Pattern file 74 is defined as the latest pattern, and for example, security inspection unit 115 prevents the computer virus from executing the program according to a blacklist system or a whitelist system using pattern file 74.

In the blacklist system, a pattern identifying the computer virus is defined in pattern file 74, and security inspection unit 115 executes virus inspection program 72 to inspect information of the inspection target using the pattern defined in pattern file 74, and invalidates the computer virus so as not to be executed when the computer virus corresponding to the defined pattern is detected based on the inspection result. In the whitelist system, a pattern identifying a safe application (programs, data, and the like) that does not correspond to the computer virus is defined in pattern file 74, and security inspection unit 115 executes virus inspection program 72 to inspect the information of the inspection target using the pattern defined in pattern file 74, and invalidates the computer virus so as not to be executed when the corresponding computer virus is detected in an undefined pattern based on the inspection result. Security inspection unit 115 may execute antivirus program 73 to delete the computer virus detected by the blacklist system or the whitelist system. Thus, security inspection unit 115 can implement the security countermeasure for the information about the inspection of the object.

"Workpiece 42" of the inspection object can be appropriately changed according to a process or a production line to which inspection device 10 is applied, such as a final product or a part thereof, or an intermediate product or a part thereof.

Timer 19 includes a counter that increments or decrements a counter value every predetermined period. Timer 19 may be implemented using a high precision event timer (HPET) or a dedicated circuit (for example, an application specific integrated circuit (ASIC) or a field-programmable gate array (FPGA)), and the like that are a hardware timer. Times 1331, 1341 indicate a time or a concept of time indicating a certain point in time based on the output of timer 19.

In the embodiment, inspection device 10 constitutes an image sensor that captures workpiece 42 using camera 20 and inspects workpiece 42 using the captured image 20a acquired by capturing. In this case, inspection device 10 is provided independently of camera 20. However, inspection device 10 may integrally include camera 20. Inspection device 10 is not limited to the image sensor, but may be any device as long as the device inspects workpiece 42 based on some detection data detected for workpiece 42. For example, inspection device 10 may be an optical sensor that inspects an appearance (surface, shape, and the like) of workpiece 42 by detecting reflected light from workpiece 42, a temperature sensor that inspects workpiece 42 by detecting a temperature of workpiece 42, a current sensor that inspects workpiece 42 by detecting a current or a resistance value, a displacement sensor that inspects displacement by an electromagnetic wave or the like including light reflected from workpiece 42, a length-measuring sensor, a three-dimensional shape measuring instrument, a tomographic image inspection device, or a non-destructive inspection device.

In regard to the inspection of workpiece 42 based on captured image 20a from camera 20, object inspection unit 111 performs appearance inspection of workpiece 42 by collating captured image 20a from camera 20 with previously-registered model image 135a. For example, inspection device 10 outputs the inspection result for each of at least one inspection type as a result of the appearance inspection.

More specifically, captured image 20a represents the appearance including the surface and shape of workpiece 42, and model image 135a represents the surface and shape of the target workpiece.

Object inspection unit 111 executes object inspection program 135 to collate captured image 20a and model image 135a by image processing such as pattern matching, thereby outputting a binary value (match (OK), mismatch (NG)) indicating whether captured image 20a is matched with model image 135a or outputting a matching degree as an inspection result. In regard to the matching degree, object inspection unit 111 can calculate the matching degree of the surface colors or the matching degree of the shapes indicated by both images according to a predetermined arithmetic operation by the pattern matching, and output the calculated value as the inspection result. For example, the matching degree includes a degree to which the surface color of workpiece 42 indicated by captured image 20a is matched with the target color indicated by model image 135a, or a degree to which the shape of workpiece 42 indicated by captured image 20a is matched with the target shape indicated by model image 135a. For example, the matching degree may include similarity based on a distance between a feature amount extracted from captured image 20a and a feature amount indicated by model image 135a. The type of inspection is not limited to the color, shape, and the like of the appearance. For example, the degree to which the position, color, and shape of a label application member of workpiece 42 extracted from captured image 20a or a processing member such as cutting of workpiece 42 extracted from captured image 20a are matched with the position, color, and shape of the target member indicated by model image 135a may be inspected and output as the inspection result. When a flaw on the surface of workpiece 42 that is not included in model image 135a is detected by pattern matching, the inspection result may include the position, color, and shape of the flaw on workpiece 42. Target inspection information 133 may include captured image 20a used for the inspection. More specific application examples of the embodiment will be described below.

### <B. Configuration of control system>

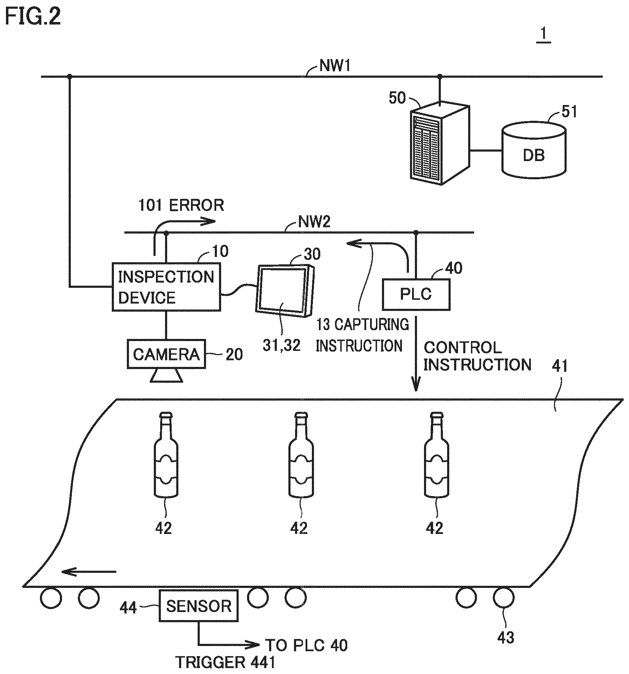

A configuration of a control system 1 applied to FA will be described. Fig. 2 is a view schematically illustrating a configuration of control system 1 of the embodiment. With reference to Fig. 2, control system 1 includes inspection device 10 and camera 20 as a main component. Camera 20 includes an optical system such as a lens or a diaphragm and a light receiving element such as a charge coupled device (CCD) image sensor or a complementary metal oxide semiconductor (CMOS) image sensor as the main component.

Control system 1 further includes an operation display device 30 connected to inspection device 10, a programmable logic controller (PLC) 40 that communicates with inspection device 10 through a network NW2, and a server 50 that communicates with inspection device 10 through a network NW1. Server 50 has a function of managing data collected by control system 1 using a data base (DB) 51.

Control system 1 further includes a servomotor 43 that drives a conveyor belt 41 constituting a conveyance path of workpiece 42, and a sensor 44 installed in linkage with conveyor belt 41. Conveyor belt 41 conveys workpiece 42 placed on a conveyance surface on the belt. A capturing view field of camera 20 is set so as to be able to capture workpiece 42 on the conveyance surface. Sensor 44 includes a proximity switch that detects that workpiece 42 passes through a predetermined position on the conveyance surface based on the capturing visual field.

Preferably a bus or a field network that performs fixed-period communication guaranteeing a data arrival time is used as network NW2. EtherCAT (registered trademark), EtherNet/IP (registered trademark), DeviceNet (registered trademark), CompoNet (registered trademark), and the like are known as the bus or the network that performs the constant periodic communication.

Network NW1 is typically a local area network (LAN) and is provided separately from network NW1 serving as a communication path with PLC 40. Although networks NW1 and NW2 are separately provided, they may be a common network. PLC 40 may be communicably connected to server 50.

Operation display device 30 is an example of a human machine interface (HMI) device, performs settings related to various pieces of processing executed by inspection device 10, and outputs (displays) information from inspection device 10. Operation display device 30 includes an information processing device corresponding to a general-purpose computer, and includes a display 31 and a touch panel 32 attached to a display surface of display 31. Display 31 typically includes a liquid crystal display, and displays various types of information obtained from inspection device 10. Touch panel 32 functions as an input unit inputting information about various settings. For example, a user can input various types of setting information by operating touch panel 32 based on the information displayed on display 31. Operation display device 30 may be a part of inspection device 10 or be connected to network NW2. Although the input unit of operation display device 30 includes the touch panel, the input unit may include a keyboard, a mouse, or both of them.

PLC 40 executes the control program to output a control instruction to servomotor 43 such that workpiece 42 is conveyed at a predetermined speed. When servomotor 43 is driven according to the control signal to convey workpiece 42 on conveyor belt 41 to a predetermined position on the conveyance surface, sensor 44 detects workpiece 42 at the predetermined position and outputs a trigger 441 to PLC 40 as a detection signal. In response to trigger 441 from sensor 44, PLC 40 outputs a capturing instruction 13 to inspection device 10. Inspection device 10 controls camera 20 to perform a capturing operation according to capturing instruction 13 from PLC 40. Thus, camera 20 captures workpiece 42 that reaches the capturing visual field, and outputs captured image 20a to inspection device 10. Inspection device 10 performs the inspection of workpiece 42 using captured image 20a and the inspection of the computer virus in parallel. When detecting the computer virus, inspection device 10 transmits a notification of an error 101 indicating that the computer virus is detected to PLC 40 through network NW2. PLC 40 outputs the received notification of error 101 by display or the like. Thus, the user is notified of the presence or absence of the computer virus as the information about the inspection of the object (workpiece 42) stored in inspection device 10. A notification destination of error 101 is not limited to PLC 40, but may include operation display device 30 or server 50.

### <C. Hardware configuration>

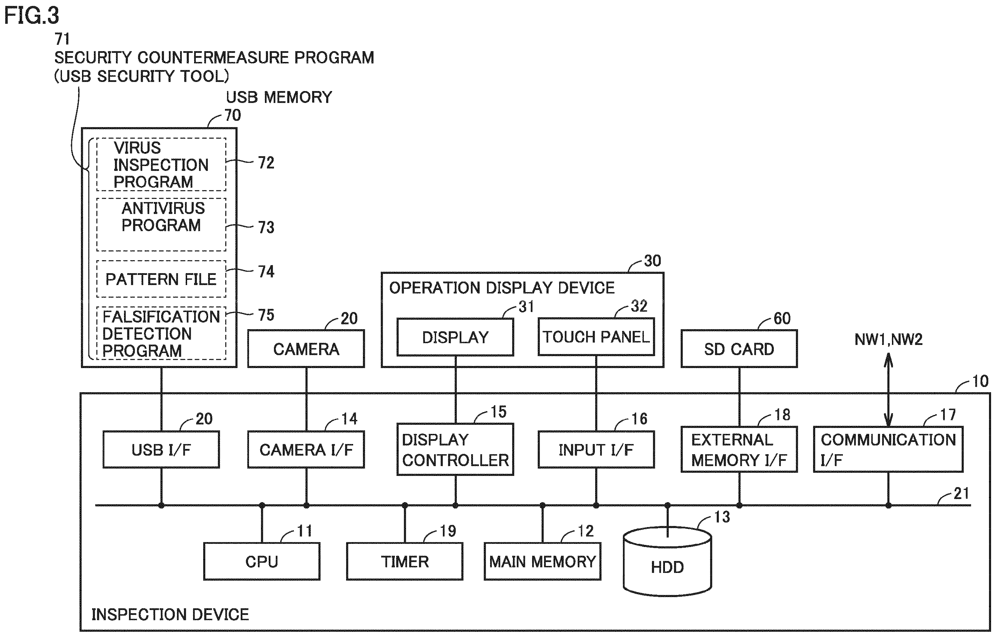

Fig. 3 is a view schematically illustrating a hardware configuration of inspection device 10 of the embodiment. With reference to Fig. 3, inspection device 10 includes central processing unit (CPU) 11, a main memory 12, HDD 13, a camera I/F 14, a display controller 15, an input I/F 16, a communication I/F 17 including a circuit communicably connecting inspection device 10 to networks NW1, NW2, an external memory I/F 18 including a circuit reading and writing an external memory such as an SD card 60, timer 19, and USB I/F 76 reading and writing USB memory 70. These components are communicably connected to one another through a bus 21.

CPU 11 loads the program stored in HDD 13 and the program stored in USB memory 70 into main memory 12 and executes the programs. Main memory 12 is typically a volatile storage device such as a dynamic random access memory (DRAM). HDD 13 is a nonvolatile storage device. Inspection device 10 may include a semiconductor storage device such as a flash memory may be adopted in addition to HDD 13 or instead of HDD 13.

Camera I/F 14 mediates data transmission between CPU 11 and camera 20. That is, camera I/F 14 outputs captured image 20a from camera 20 to CPU 11, and outputs a command based on capturing instruction 13 from CPU 11 to camera 20.

Display controller 15 is connected to display 31 of operation display device 30. Display controller 15 causes display 31 to display the information by driving display 31 according to the display control data based on the information including the processing result in CPU 11.

Input I/F 16 is connected to touch panel 32 of operation display device 30 to mediate the data transmission between CPU 11 and touch panel 32. That is, input I/F 16 receives an operation instruction given by the user operating touch panel 32, and outputs the operation instruction to CPU 11.

SD card 60 that can be connected to inspection device 10 through external memory I/F 18 is an example of the external memory constituting the nonvolatile storage device, and may be detachably attached to inspection device 10 through external memory I/F 18. The external memory attached to inspection device 10 through external memory I/F 18 is not limited to a memory card such as SD card 60, but may be a USB memory.

Communication I/F 17 exchanges various data among PLC 40, server 50, and CPU 11. Communication I/F 17 includes a hardware circuit corresponding to network NW1 exchanging various data with PLC 40 and a hardware circuit corresponding to network NW2 exchanging various data with server 50.

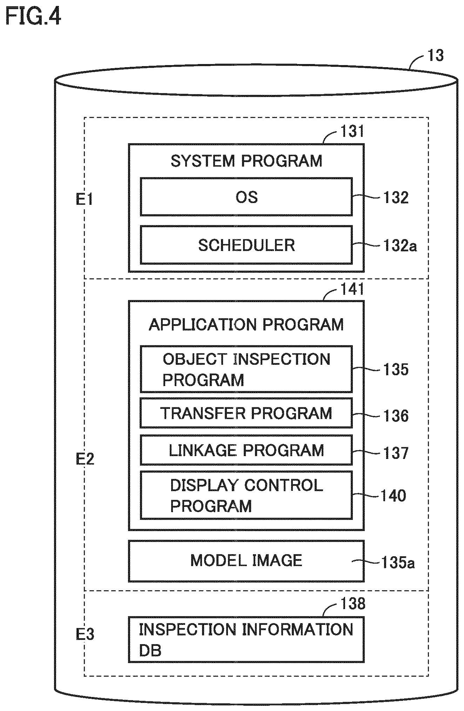

Fig. 4 is a view schematically illustrating an example of the information stored in HDD 13 in Fig. 3. With reference to Fig. 4, HDD 13 includes an area E1 in which system program 131 including an OS 132 and a scheduler 132a is stored, an area E2 in which various application programs 141 and data are stored, and an area E3 in which inspection information DB 138 is stored.

In area E2, as the application program 141, object inspection program 135, a transfer program 136, a linkage program 137 that implements linkage unit 112 when executed, and a display control program 140 are stored, and data of model image 135a is stored. When executed, transfer program 136 transfers the data of inspection device 10 to another device (for example, server 50 and PLC 40) through networks NW1, NW2. For example, the data transferred by transfer program 136 includes inspection information DB 138. When executed, display control program 140 controls the display of operation display device 30 in cooperation with display controller 15.

When executed, scheduler 132a manages execution order of each program. More specifically, scheduler 132a manages the execution order of each program by switching the assignment of CPU 11 to each process generated when the application program is executed. For example, scheduler 132a performs this switching according to a priority determined previously for each program. A process (program) to which CPU 11 is assigned in preference to other processes (other programs) by scheduler 132a can end the execution in a shorter time than other processes (programs). The program managing the execution order by scheduler 132a includes security countermeasure program 71 of USB memory 70 and application program 141 in area E2. Because the process is one execution unit when CPU 11 executes the program, "assigning CPU 11 to the process" by scheduler 132a is also referred to as "assigning CPU 11 to the program" in the embodiment.

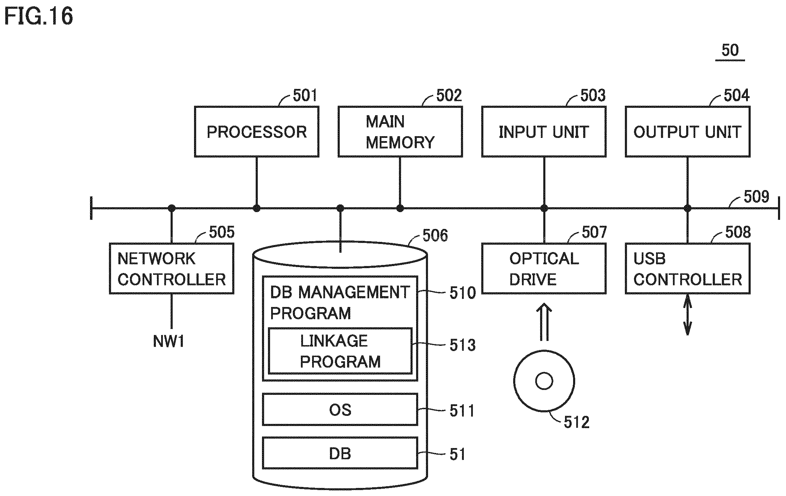

Fig. 16 is a view illustrating a configuration example of server 50 of the embodiment. Server 50 is an example of an external information processing device that is implemented using hardware (for example, general-purpose personal computer) according to a general-purpose architecture to communicate with inspection device 10. With reference to Fig. 16, server 50 includes a processor 501, a main memory 502, an input unit 503, an output unit 504, a network controller 505 that connects network NW1, a storage 506, an optical drive 507, and a USB controller 508 that communicates with the external device. These components are connected to each other through a processor bus 509.

Processor 501 is configured of a CPU and the like, reads a program stored in storage 506, develops the program in main memory 502, and executes the program.

Main memory 502 is configured of the volatile storage device such as a DRAM. For example, storage 506 includes a non-volatile storage device such as an HDD. Storage 506 stores various programs including a DB management program 510 managing DB 51 in addition to OS 511 implementing a basic function. Storage 506 includes an area storing DB 51. DB management program 510 includes a linkage program 513 implementing a linkage unit 52 described later.

Input unit 503 is configured on a keyboard and a mouse, and receives a user operation for server 50. Output unit 504 includes a display, various indicators, and a printer, and outputs a processing result from processor 501 and the like.

Optical drive 507 reads the program from storage medium 512 (for example, an optical recording medium such as a digital versatile disc (DVD)) to store the program in storage 506 or the like.

Fig. 16 illustrates a configuration example in which modules required for server 50 are provided by processor 501 executing the program. However, some or all of these provided modules may be implemented using a dedicated hardware circuit (for example, ASIC or FPGA).

### <D. Functional configuration>

Fig. 5 is a view illustrating a functional configuration example of inspection device 10 of the embodiment. CPU 11 executes object inspection program 135, linkage program 137, display control program 140, and transfer program 136 to implement modules of object inspection unit 111, linkage unit 112, a display controller 113, and transfer unit 114.

Object inspection unit 111 includes a pattern matching unit 1111 and an evaluation unit 1112 that perform the pattern matching of collating captured image 20a from camera 20 with model image 135a. Evaluation unit 1112 calculates the matching degree of the surface color and the matching degree of the shape that are indicated by captured image 20a and model image 135a according to a predetermined arithmetic operation based on the result of the pattern matching, and outputs the calculated value as the inspection result. The inspection result is stored in a target inspection file 120 of main memory 12 as history information. Inspection device 10 transmits the inspection result to PLC 40.

PLC 40 can perform predetermined processing based on the inspection result received from inspection device 10. For example, when the inspection result indicates mismatching (NG), PLC 40 controls the robot (not illustrated) provided in linkage with the conveyance path (conveyor belt 41) to pick workpiece 42 corresponding to the inspection result and remove the workpiece 42 from the conveyance path. The target device controlled by PLC 40 based on the inspection result is not limited to the robot.

Pattern matching unit 1111 performs the inspection processing of workpiece 42 using captured image 20a from camera 20. In order to increase the accuracy of the inspection processing, pattern matching unit 1111 processes captured image 20a from camera 20 to perform the inspection processing. In this case, unprocessed captured image 20a is referred to as raw image data 1321, and processed captured image 20a is referred to as processed image data 1322. Pattern matching unit 1111 stores raw image data 1321 and corresponding processed image data 1322 in linkage with each other in target inspection file 120. In linkage with raw image data 1321 or processed image data 1322, information about capturing such as a capturing time or an illumination condition may also be stored in target inspection file 120.

Pattern matching unit 1111 performs processing on raw image data 1321 to generate processed image data 1322. For example, the processing includes processing for removing a noise and unevenness from raw image data 1321 (data of captured image 20a), and processing for changing contrast. When performing the processing, pattern matching unit 1111 performs the pattern matching between processed image data 1322 and model image 135a. Pattern matching unit 1111 sends the result of the pattern matching to evaluation unit 1112.

Evaluation unit 1112 calculates the matching degree of the appearance of workpiece 42 with the target, for example, the matching degree of the surface color, the matching degree of the shape, and the like according to a predetermined arithmetic operation based on the output from pattern matching unit 1111, and outputs the calculated value as the inspection result. Evaluation unit 1112 generates target inspection information 133 including the inspection result for each inspection of workpiece 42, and stores target inspection information 133 in target inspection file 120.

In target inspection file 120, processing information 130 is stored for each inspection of workpiece 42 (captured image 20a). Processing information 130 includes image data 132 including raw image data 1321 and processed image data 1322, which are obtained by the inspection processing of object inspection unit 111, and target inspection information 133 having the inspection result.

Security inspection unit 115 inspects the presence or absence of the computer virus by executing virus inspection program 72 on the information about the inspection of workpiece 42 including object inspection program 135 of HDD 13. Security inspection unit 115 generates security inspection information 134 based on the inspection result each time the computer virus is inspected, and stores security inspection information 134 in a security inspection file 121 of main memory 12. The computer virus inspection result is stored as the history information in security inspection file 121 of main memory 12. For example the information of the inspection target by security inspection unit 115 can be variably designated by the user through operation display device 30. For example, target inspection file 120 and security inspection file 121 correspond to a volatile or nonvolatile area of main memory 12.

In the embodiment, the information about the inspection of workpiece 42 that is the inspection target by security inspection unit 115 can be designated in a physical storage medium unit, for example, a disk unit, a folder unit, or a file unit of the program or data. For example, the physical storage medium unit corresponds to the disk (such as HDD 13) unit, the folder unit corresponds to a unit such as areas E1, E2, E3 that are data grouped on the disk, and the file unit corresponds to a program unit or a data unit. In the embodiment, the inspection target of security inspection unit 115 is the disk unit of HDD 13 that stores system program 131, application program 141, and inspection information DB 138. Accordingly, security inspection unit 115 inspects the computer virus for various types of information stored in HDD 13 including information about the inspection of workpiece 42, such as object inspection program 135, model image 135a, and inspection information DB 138 in Fig. 4.

The inspection target of security inspection unit 115 is not limited to all the pieces of information stored in HDD 13, but the inspection target can be changed as long as at least the validity of the inspection result of workpiece 42 can be ensured. For example, the user may specify to narrow down the inspection target of the computer virus to the information about the inspection of workpiece 42 such as object inspection program 135, model image 135a, and inspection information DB 138 among the pieces of information of HDD 13 through operation display device 30.

When processing information 130 is stored in target inspection file 120, linkage unit 112 links target inspection information 133 of stored processing information 130 with security inspection information 134 stored in security inspection file 121 based on the time when each inspection is performed, and stores the linked information in inspection information DB 138 of HDD 13.

More specifically, linkage unit 112 searches security inspection file 121 based on time 1331 indicated by target inspection information 133 of processing information 130. Through the search, security inspection information 134 indicating time 1341 that is before time 1331 and corresponds to the latest time is extracted from security inspection file 121. Linkage unit 112 links target inspection information 133 with extracted security inspection information 134.

Transfer unit 114 transfers the content of inspection information DB 138 to server 50 through network NW1 and network NW2 through communication I/F 17 in order to store the content of inspection information DB 138 in DB 51. In addition, transfer unit 114 transfers target inspection information 133 including the inspection result of workpiece 42 from object inspection unit 111 and security inspection information 134 from security inspection unit 115 to server 50 through communication I/F 17 while linking inspection times 1331, 1341 with each other. Server 50 includes linkage unit 52 that stores target inspection information 133 and security inspection information 134 that are transferred by transfer unit 114 in the storage medium, for example, DB 51 in linkage with each other based on inspection times 1331, 1341 linked with target inspection information 133 and security inspection information 134. Linkage unit 52 is implemented by executing linkage program 513 in Fig. 16. The destination to which the information in inspection information DB 138 is transferred by transfer unit 114 may be operation display device 30. In addition, because operation display device 30 includes the component similar to linkage unit 52, operation display device 30 may store target inspection information 133 and security inspection information 134 transferred from transfer unit 114 in linkage with each other based on inspection times 1331, 1341 linked with each other.

In order to display the content of inspection information DB 138, display controller 113 generates display control data based on the content of inspection information DB 138 and outputs the display control data to operation display device 30. Operation display device 30 drives display 31 according to the display control data, thereby displaying the content of inspection information DB 138. For example, inspection device 10 displays a plurality of pieces of linkage information linked with inspection information DB 138 in time series according to time 1331 at which inspection of workpiece 42 is performed. Alternatively, the information is displayed in time series according to time 1341 at which the computer virus inspection is performed. Alternatively, the plurality of pieces of linkage information are displayed in time series according to a combination of times 1331, 1341. Furthermore, transfer unit 114 can receive the plurality of pieces of linkage information from DB 51 of server 50 to transfer the plurality of pieces of linkage information to display controller 113, and display controller 113 can display the plurality of pieces of linkage information transferred sequentially according to time 1331 or 1341 linked with the information. Thus, inspection device 10 can provide the user with information evaluating the validity (reliability) of the inspection result from the inspection result of workpiece 42 linked with the period (time) when the computer virus is inspected.

### (d1. Detection of Data falsification)

Security inspection unit 115 can also detect whether the data of inspection information DB 138 is falsified as the security event by executing falsification detection program 75. For example, a falsification detection method includes a method using a hash value or a method for detecting structured query language (SQL) injection.

In the method using the hash value, when target inspection file 120 is stored (written) in inspection information DB 138, CPU 11 calculates the hash value (this is referred to as an original hash value) according to a predetermined arithmetic operation based on the information about target inspection file 120, and stores the hash value in main memory 12 or the like. By executing falsification detection program 75, security inspection unit 115 calculates the hash value according to the predetermined arithmetic operation for each target inspection file 120 of inspection information DB 138. The calculated hash value is collated with the original hash value of target inspection file 120, and it is detected that the security event in which the data of inspection information DB 138 is falsified is generated when the collation result indicates mismatching. The calculation target of the hash value is not limited to the file unit of target inspection file 120, but may be target inspection information 133 unit. In addition, the value used for the falsification detection is not limited to the hash value, but may be a checksum.

In the method for detecting SQL injection, security inspection unit 115 monitors an SQL command issued for data operation (read, write, and the like) of inspection information DB 138. More specifically, security inspection unit 115 collates the issued SQL command with a previously-registered valid pattern, and detects that there is a possibility that the data in inspection information DB 138 is falsified when the collation result indicates mismatching. Accordingly, when the invalid SQL command is issued, security inspection unit 115 detects that the security event occurs due to SQL injection that enables the falsification of inspection information DB 138.

Security inspection unit 115 may perform both the inspection of the computer virus and the inspection of the data falsification as the inspection of the security event, or may perform one of them.

### <E. Flowchart>

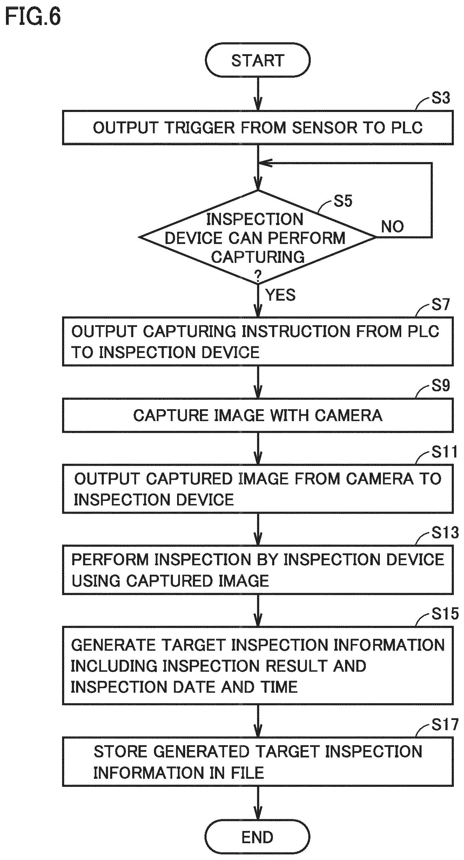

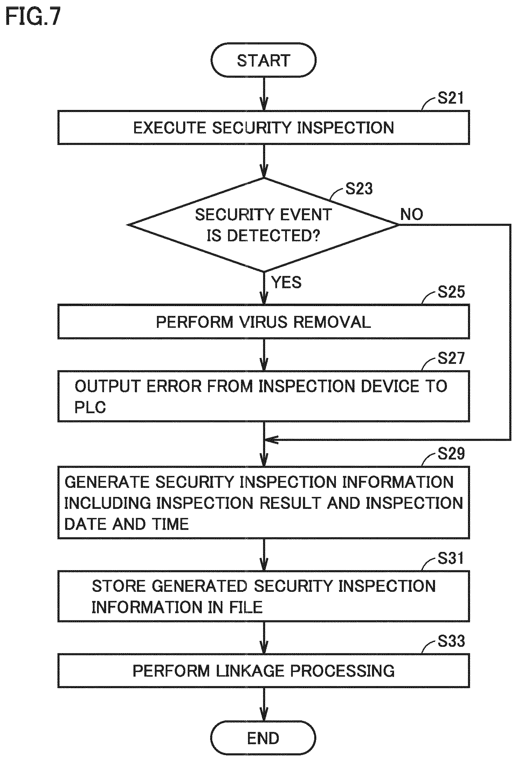

Fig. 6 is a flowchart illustrating object inspection processing of the embodiment. Fig. 7 is a flowchart illustrating security inspection processing of the embodiment. More specifically, processing in Fig. 6 is implemented by object inspection unit 111, namely, CPU 11 mainly executes object inspection program 135. The processing in Fig. 7 is implemented by security inspection unit 115 and linkage unit 112, namely, is implemented by CPU 11 mainly executing security countermeasure program 71 and linkage program 137.

The processing in Fig. 6 is repeatedly performed every time trigger 441 is output from sensor 44. More specifically, sensor 44 detects workpiece 42 to output trigger 441 to PLC 40 (step S3). When receiving trigger 441, PLC 40 determines whether inspection device 10 is in a capturable state based on the state of inspection device 10 (step S5). While inspection device 10 is determined not to be in the capturing enabled state (NO in step S5), step S5 is repeated. When inspection device 10 is determined to be in the capturing enabled state (YES in step S5), PLC 40 outputs capturing instruction 13 to inspection device 10 (step S7). Inspection device 10 controls camera 20 to perform the capturing operation according to capturing instruction 13 from PLC 40 (step S9), and camera 20 outputs captured image 20a of workpiece 42 acquired by the capturing to inspection device 10 (step S11).

Inspection device 10 inspects workpiece 42 using captured image 20a from camera 20 as object inspection unit 111 (step S13), generates target inspection information 133 having (linked with) the inspection result and inspection execution time 1331 (for example, date and time) (step S15), and stores generated target inspection information 133 in target inspection file 120 (step S17).

Thus, inspection device 10 inspects each workpiece 42 that is conveyed by conveyor belt 41 to reach the capturing visual field of camera 20, and can sequentially store the inspection result and target inspection information 133 having inspection time 1331 in target inspection file 120.

With reference to Fig. 7, inspection device 10 serves as security inspection unit 115 to execute the inspection on the occurrence of the security event with respect to the information (information including object inspection program 135, model image 135a, and inspection information DB 138 of HDD 13) about the inspection of workpiece 42 including object inspection program 135 (step S21). When determining that the security event is not detected based on the inspection result (NO in step S23), inspection device 10 proceeds to step S29 described later as security inspection unit 115. However, when determining that the security event is detected (YES in step S23), inspection device 10 proceeds to step S25.

Here, it is assumed that the computer virus is detected as the security event. As security inspection unit 115, inspection device 10 performs the computer virus removal on the information about the inspection of workpiece 42 (step S25), and outputs the notification of error 101 to PLC 40 (step S27).

Inspection device 10 generates security inspection information 134 including (links) the inspection result including the presence or absence of the security event and inspection time 1341 (date and time) as security inspection unit 115 (step S29), and stores generated security inspection information 134 in security inspection file 121 (step S31).

Inspection device 10 generates information in which target inspection information 133 about target inspection file 120 and security inspection information 134 about security inspection file 121 are linked with each other based on inspection time 1331 and time 1341 as linkage unit 112, and stores the generated information in inspection information DB 138 (step S33).

More specifically, inspection device 10 extracts at least one piece of target inspection information 133 for which the linkage processing is not yet performed from target inspection file 120. For example, inspection device 10 specifies latest inspection time 1341 of the clocked time and inspection time 1341 immediately before the latest inspection time based on the clocked time (for example, the current time) output by timer 19 in inspection time 1341 of security inspection information 134 stored in security inspection file 121, and extracts at least one piece of target inspection information 133 having inspection time 1331 corresponding to the time between specified latest inspection time 1341 and immediately previous inspection time 1341 from target inspection file 120. Inspection device 10 generates one or a plurality of pieces of linkage information by linking each of the extracted at least one pieces of target inspection information 133 with security inspection information 134 having time 1341 of the latest inspection, and stores the generated linkage information in inspection information DB 138.

### <F. Implementation schedule of object inspection and security inspection>

In the embodiment, the period executing security countermeasure program 71 includes a predetermined period, such as a period when a set-up of a production line on which control system 1 is provided is changed, or a period when inspection device 10 is stopped (a period when operation is started). At such a predetermined time, there is a possibility that the program or data installed in inspection device 10 is updated (addition, deletion, change) with the set-up change. Therefore, the computer virus of the updated program or data can be inspected by executing security countermeasure program 71 of USB memory 70 at this time.

In addition, the user may attach USB memory 70 to inspection device 10 only at the predetermined time such as when the set-up is changed or when inspection device 10 is stopped (when the operation is started). As a result, because USB memory 70 is removed from inspection device 10 during the operation of inspection device 10, even when there is a possibility that the computer virus invades inspection device 10 through a route such as networks NW1, NW2 during the operation, a situation in which the computer virus enters USB memory 70 can be avoided.

In the embodiment, the period at which security countermeasure program 71 is executed is not limited to the predetermined period. More specifically, it may be the period when scheduler 132a assigns security countermeasure program 71 of USB memory 70 to CPU 11 according to a predetermined priority while inspection device 10 is in operation.

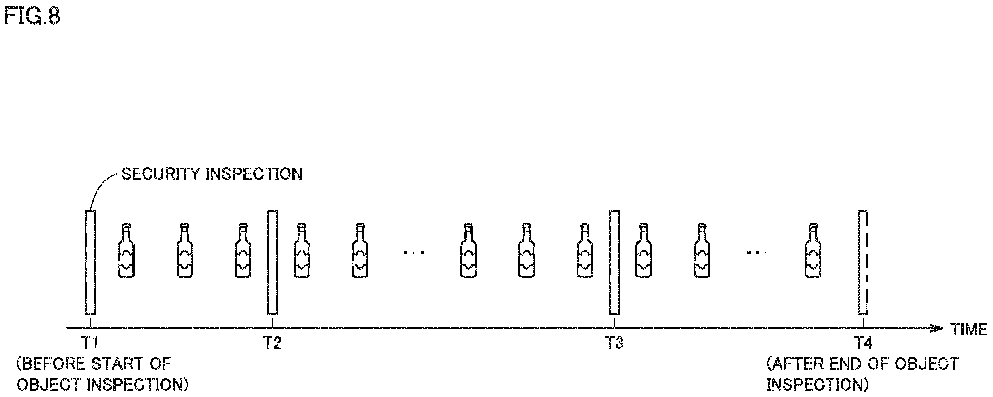

In the embodiment, the priority of object inspection program 135 is set higher than the priority of security countermeasure program 71 in regard to the predetermined priority. According to the priority thus set, scheduler 132a can assign CPU 11 to security countermeasure program 71 when the execution of object inspection program 135 ends. More specifically, for example, when detecting the time during which CPU 11 is not assigned to any program, namely, an idle time of CPU 11, scheduler 132a assigns the spare time to the execution of security countermeasure program 71. Fig. 8 is a view illustrating the execution time of security countermeasure program 71 of the embodiment in linkage with the inspection time of workpiece 42. For example, in Fig. 8, the horizontal axis indicates the operation time of inspection device 10. Scheduler 132a detects the idle time at times T1, T2, T3, T4 during which scheduler 132a is operating, and executes security countermeasure program 71 at each of times T1, T2, T3, T4.

Thus, because security countermeasure program 71 is executed in the idle time of CPU 11 during the operation of inspection device 10, even when security countermeasure program 71 is executed in parallel with object inspection program 135 during the operation, the situation in which a resource of CPU 11 executing object inspection program 135 is exhausted can be avoided to satisfy a tact time required for the production line or control system 1.

### <G. Example of information>

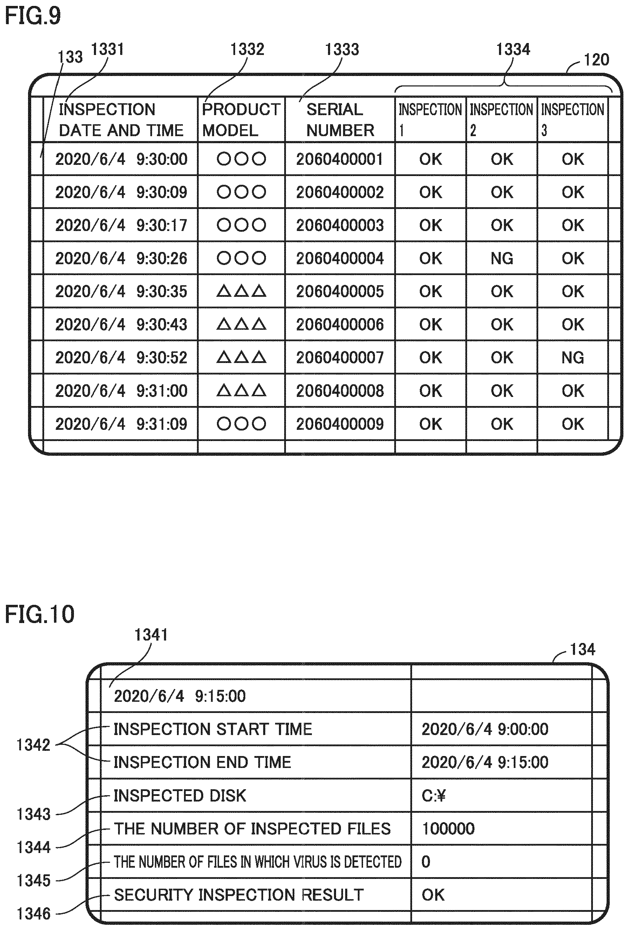

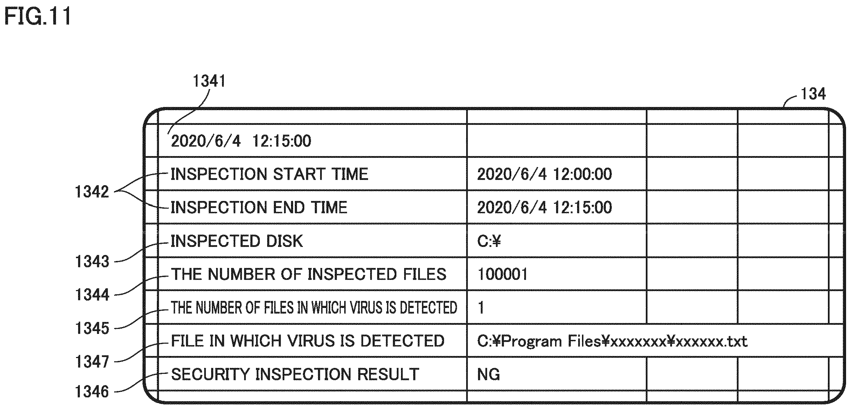

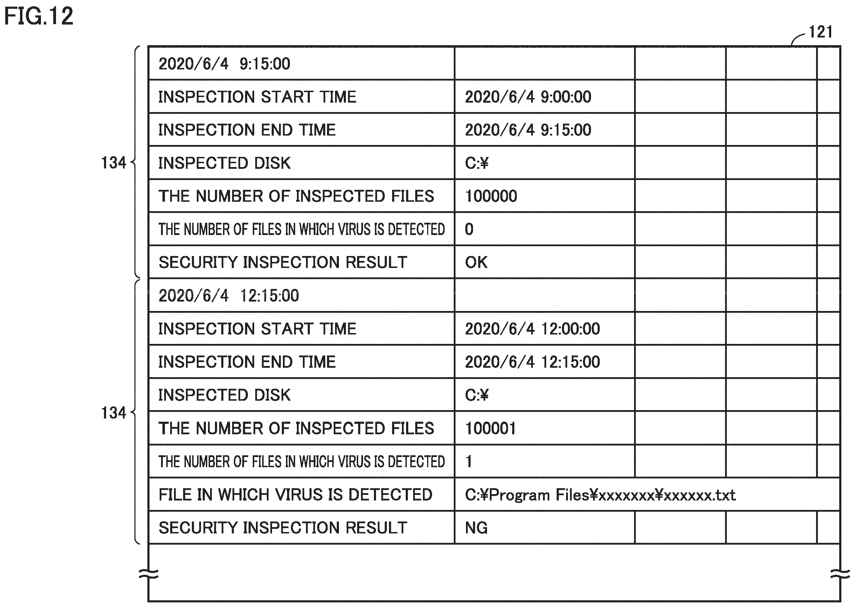

With reference to Figs. 9 to 14, a specific example of information used in the embodiment will be described. Fig. 9 is a view illustrating an example of target inspection file 120 of the embodiment. Figs. 10 and 11 are views illustrating an example and another example of security inspection information 134 of the embodiment. Fig. 12 is a view illustrating an example of the security inspection file of the embodiment. With reference to Fig. 9, target inspection file 120 stores target inspection information 133 corresponding to each of the inspections of the plurality of workpieces 42. Each piece of target inspection information 133 includes inspection time 1331 indicating the date and time when the inspection is performed, a product model 1332 and serial number 1333 as identification information about workpiece 42 of the inspection target, and an inspection result 1334 (inspection 1, inspection 2, inspection 3) of workpiece 42. Inspection result 1334 includes three types of inspection 1, inspection 2, inspection 3, but the number of types of inspection is not limited to three. Examples of the type of inspection result 1334 include the matching degree of surface color, the matching degree of shape, and the binary value (match (OK), mismatch (NG)) indicating whether captured image 20a is matched with model image 135a as the result of the appearance inspection of workpiece 42.

With reference to Fig. 10, security inspection information 134 includes inspection time 1341 and a security inspection result 1346. Security inspection result 1346 includes a value indicating whether the computer virus his detected for the information about the inspection target (no virus detection: OK, with virus detection: NG). Security inspection information 134 further includes an inspection start time and end time 1342 related to inspection time 1341, an identifier 1343 of the storage medium of the inspection target, an inspected information amount 1344, and an information amount 1345 in which the computer virus is detected. In the embodiment, inspection time 1341 is matched with the inspection end time of inspection start time and end time 1342. However, inspection time 1341 is not limited thereto, but may be the inspection start time. Identifier 1343 of the storage medium is information identifying the storage medium storing the information of the inspection target, and for example, indicates a folder (C:) of HDD 13. For example, information amount 1344 indicates the number of inspected files, and specifically indicates the number of files stored in the storage medium (for example, HDD 13) indicated by identifier 1343. Information amount 1345 indicates the number of files in which the computer virus is detected among the inspected files indicated by information amount 1344. Information amount 1345 in Fig. 10 is based on the fact that the number of files in which the computer virus is detected indicates zero, and security inspection unit 115 sets OK (no virus detection) as security inspection result 1346.

Security inspection result 1346 can include the inspection result for each type of inspection of the security event performed by security inspection unit 115. That is, security inspection result 1346 may include the data of the inspection result for each of the inspection of the computer virus and the inspection of the data falsification. In security inspection result 1346, when the inspection of the computer virus and the inspection of the data falsification are performed, OK may be set in the security inspection result 1346 in the case where both the inspection results indicate OK (no virus detection, no data falsification), and NG may be set in the security inspection result in the case where at least one of the inspection of the computer virus and the inspection of the data falsification indicates NG (the virus detected exists or the data falsification exists).

Security inspection information 134 in Fig 11 includes an identifier 1347 of the file in which the computer virus is detected, in contrast to Fig 10. With reference to Fig. 10, when information amount 1345 indicates that the number of files in which the computer virus is detected is one (that is, it is not zero), and security inspection unit 115 sets NG as security inspection result 1346 and sets identifier 1347 of the file in which the computer virus is detected in security inspection information 134. For example, identifier 1347 includes a file name, and the file name may be specified using a folder name to which the file belongs. Other items of security inspection information 134 in Fig. 11 are the same as those in Fig. 10, and thus the description thereof will not be repeated. In the case of Fig. 11, inspection device 10 may set a countermeasure result including a result (whether the computer virus removal is successfully performed) of the computer virus removal (step S25 in Fig. 7) performed on the infected file in security inspection information 134.

When acquiring security inspection information 134 in Figs. 10 and 11, inspection device 10 stores these pieces of information in security inspection file 121 as illustrated in Fig. 12. According to security inspection file 121 in Fig. 12, for example, it is indicated that the information has the computer virus between time T2 (2020/6/4 9:15:00) and time T3 (2020/6/4 12:15:00).

Inspection device 10 causes operation display device 30 to display security inspection file 121 in main memory 12 through display controller 113. Thus, inspection device 10 can notify the user whether the computer virus is detected, the detection time, the detected file, and the like. In addition, inspection device 10 may display target inspection file 120 of main memory 12 on operation display device 30 through display controller 113. Inspection device 10 may transfer target inspection file 120 and security inspection file 121 to PLC 40 or server 50 for display. Server 50 may be configured to store target inspection file 120 or security inspection file 121 transferred from inspection device 10 in DB 51.

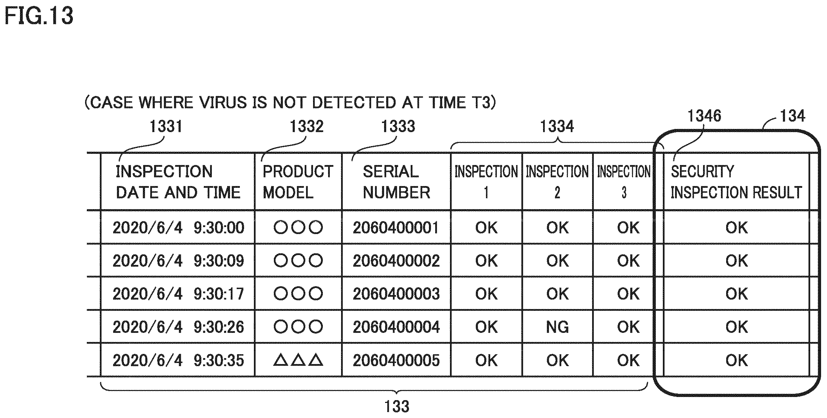

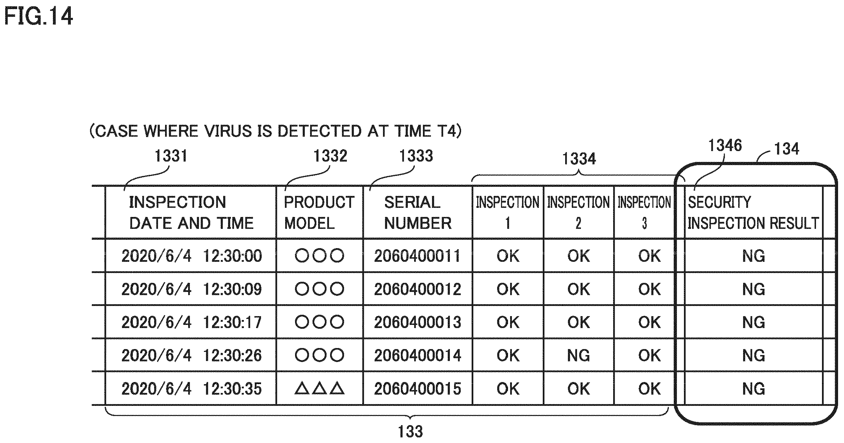

Figs. 13 and 14 are views illustrating an example and another example of inspection information DB 138 of the embodiment. Fig. 13 illustrates an example of information linked by the linkage processing (step S33 in Fig. 7) when the computer virus is not detected at time T3 (2020/6/4 12:15:00). In contrast to Fig. 13, Fig. 14 illustrates an example of information linked by the linkage processing (step S33 in Fig. 7) when the computer virus is detected at time T4 (2020/6/4 later than 12:15:00). In Fig. 13, target inspection information 133 is linked with security inspection information 134 including security inspection result 1346 ('OK'). In contrast, in Fig. 14, target inspection information 133 is linked with security inspection information 134 including security inspection result 1346 ('NG').

Linkage unit 52 of server 50 can similarly perform the processing in Figs. 9 to 14 using the information of DB 51.

### <H. Case where computer virus is detected>

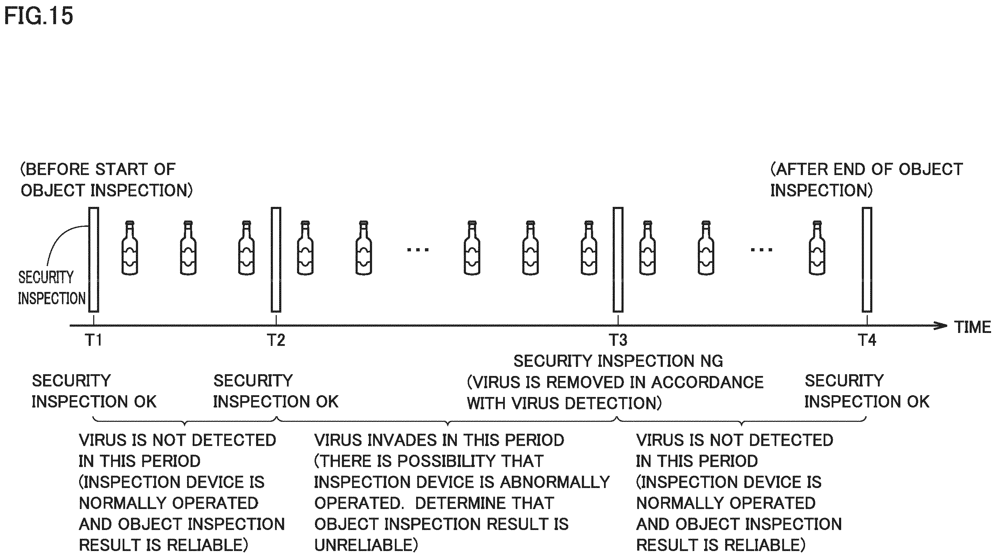

Fig. 15 is a view illustrating the validity of target inspection information 133 in linkage with an execution period of the embodiment. In Fig. 15, the horizontal axis indicates the operation time of inspection device 10, and security countermeasure program 71 is executed at each of times T1, T2, T3, T4. In Fig. 15, no computer virus is detected at times T1, T2, but the computer virus is detected at time T3 and the computer virus removal (step S25 in Fig. 7) is performed. Due to the successful removal, no computer virus is detected at subsequent time T4. Accordingly, in the case of Fig. 15, inspection result 1334 of target inspection information 133 acquired from time T3 at which security inspection result 1346 is 'NG 'to time T4 (security inspection result 1346 is 'OK' at time T4) at which the next computer virus inspection is performed corresponds to information indicating the inspection result of workpiece 42 performed using the information (the information such as object inspection program 135 and model image 135a) in which the virus is removed. Thus, even when the computer virus is detected at time T3, inspection device 10 can ensure the validity (reliability) of inspection result 1334 acquired between times T3 to T4 by removing the computer virus.

Fig. 15 also illustrates a scene in which target inspection information 133 and security inspection information 134 are linked with each other based on inspection times 1331, 1341. In the linkage, for example, linkage unit 112 or linkage unit 52 links at least one piece of target inspection information 133, which is linked with inspection time 1331 corresponding to a predetermined period going back from inspection time 1341 (for example, time T2 in Fig. 15) linked with security inspection information 134, with security inspection information 134 (security inspection information 134 in which inspection time 1341 is time T2). The predetermined period can correspond to the interval at which security inspection unit 115 inspects the security event, and can be a variable period such as a period from time T1 to time T2, a period from time T2 to time T3, and a period from time T3 to time T4 in Fig. 15. Both linkage unit 112 and linkage unit 52 may link with each other, and one of them may perform the linkage.

### <I. Computer program>

In the embodiment, the components in Figs. 1 and 5 are provided by at least one processor such as CPU 11 of inspection device 10 executing the program, and inspection device 10 may implement some or all of these components using the dedicated hardware circuit (for example, ASIC or FPGA). Alternatively, the main part of inspection device 10 may be implemented using hardware according to a general-purpose architecture. In this case, the plurality of OSs having different uses may be executed in parallel using a virtualization technology, and the required application may be executed on each OS.

In addition, when inspection device 10 includes a plurality of processors such as CPU 11, the program corresponding to each component in Fig. 1 or 5 can be executed by the plurality of processors. When CPU 11 includes a plurality of cores, inspection device 10 can execute each component in Fig. 1 or 5 by the plurality of cores in CPU 11.

For example, the storage medium that stores the program implementing the components in Fig. 1 or 5 includes HDD 13 or an auxiliary storage device such as a solid state drive, and stores at least object inspection program 135 and linkage program 137. In the embodiment, security countermeasure program 71 is stored in USB memory 70 as the external storage medium of inspection device 10, and may be stored in SD card 60 built in inspection device 10.

The storage medium outside inspection device 10 is not limited to SD card 60, but may include a medium that accumulates information such as the program by electric, magnetic, optical, mechanical, or chemical action such that a computer, other devices, a machine, or the like can read the information such as the recorded program. CPU 11 of inspection device 10 may acquire the program implementing the components in Figs. 1 and 5 described above from the external storage medium.

In addition, inspection device 10 may acquire the program implementing the components in Figs. 1 and 5 by being downloaded from the external device to a predetermined storage area of inspection device 10 through networks NW1, NW2.

Storage medium 512 outside server 50 is not limited to the DVD, but may include a medium that accumulates information such as the program by electric, magnetic, optical, mechanical, or chemical action such that a computer, other devices, a machine, or the like can read the information such as the recorded program. Processor 501 of server 50 may acquire linkage program 513 or DB management program 510 implementing linkage unit 52 described above from the external storage medium.

Furthermore, server 50 may acquire linkage program 513 or DB management program 510 by being downloaded from an external device to a predetermined storage area in server 50 through network NW1.

### <J. Appendix>

The above embodiment includes the following technical ideas.
[Configuration 1] An inspection device (10) comprising:
   an object inspection unit (111) configured to inspect an object by executing an inspection program;
   a storage (13) configured to store various types of information (135, 138, 131) including information (135, 135a, 138) about an inspection of the object including the inspection program (135);
   a security inspection unit (116) configured to execute a security countermeasure program (71) on the information stored in the storage to inspect a security event that is possible to occur in the information; and
   an output unit (112, 114) configured to output target inspection information (133) including an inspection result of the object from the object inspection unit and security inspection information (134) including an inspection result of a computer virus from the security inspection unit in linkage with inspection times (1331, 1341) at which each inspection is performed.
[Configuration 2] The inspection device described in configuration 1, wherein the output unit includes a first linkage unit (112) configured to store the target inspection information and the security inspection information in linkage with each other based on an inspection time linked with each of the target inspection information and the security inspection information.
[Configuration 3] The inspection device described in configuration 1 or 2, further comprising a communication interface (17) configured to communicate with an external information processing device (50), wherein
   the output unit includes a transfer unit (114) that transfers target inspection information including an inspection result of the object from the object inspection unit and security inspection information including an inspection result of a computer virus from the security inspection unit to the external information processing device through the communication interface while linking the inspection time of each of the target inspection information and the security inspection information with each other, and
   the information processing device includes a second linkage unit (52) configured to store the target inspection information and the security inspection information that are transferred by the transfer unit in linkage with each other based on an inspection time linked with each of the target inspection information and the security inspection information.
[Configuration 4] The inspection device described in configuration 2 or 3, wherein the linkage, at least one piece of the target inspection information linked with an inspection time corresponding to a predetermined period going back from an inspection time linked with the security inspection information is linked with the security inspection information.
[Configuration 5] The inspection device described in configuration 4, wherein the predetermined period corresponds to an interval at which the security inspection unit inspects the security event.
[Configuration 6] The inspection device described in any one of configurations 1 to 5, wherein the security countermeasure program is stored in a storage medium (70) detachably attached to the inspection device.
[Configuration 7] The inspection device described in any one of configurations 1 to 6, wherein the inspection device outputs a plurality of pieces of linkage information including the target inspection information and the security inspection information linked with the target inspection information based on the inspection time in time series according to at least one of the inspection times (1331, 1341) of both the target inspection information and the security inspection information.
[Configuration 8] The inspection device described in any one of configurations 1 to 7, wherein the security countermeasure program includes a program (73) that performs processing corresponding to the security event, and
   the security inspection unit executes the program (73) that performs the processing corresponding to the security event when the security event of the information is detected.
[Configuration 9] The inspection device described in any one of configurations 1 to 8, wherein the inspection program includes a program that inspects the object based on a captured image (20a) of the object.
[Configuration 10] The inspection device described in any one of configurations 1 to 9, wherein the inspection device executes the security countermeasure program at a predetermined period.
[Configuration 11] The inspection device described in any one of configurations 1 to 10, wherein the inspection device executes the security countermeasure program in parallel with the inspection program for the object during operation.
[Configuration 12] The inspection device described in configuration 11, wherein a priority of execution of the inspection program for the object is higher than a priority of execution of the security countermeasure program.
[Configuration 13] A method for inspecting an object, the method comprising:
   executing an inspection program (135) that inspects the object;
   executing a security countermeasure program (71) that inspects a security event that is possible to occur in information in a memory (13) storing various types of information (131, 135, 135a, 138) including information (135, 135a, 138) related to inspection of the object including the inspection program (135); and
   outputting target inspection information (133) including an inspection result of the object and security inspection information (134) including an inspection result of a security event of the information in linkage with times (1331, 1342) at which each inspection is performed.
[Configuration 14] A program that causes at least one processor to execute:
   executing an inspection program that inspects an object;
   executing a security countermeasure program (71) that inspects a security event that is possible to occur in information in a memory (13) storing various types of information (131, 135, 135a, 138) including information (135, 135a, 138) related to inspection of the object including the inspection program (135); and
   outputting target inspection information (133) including an inspection result of the object and security inspection information (134) including an inspection result of a security event of the information in linkage with times (1331, 1341) at which each inspection is performed.

It should be considered that the disclosed embodiment is an example in all respects and not restrictive. The scope of the present invention is defined by not the description above, but the claims, and it is intended that all modifications within the meaning and scope of the claims are included in the present invention.

### REFERENCE SIGNS LIST

1: control system, 10: inspection device, 12: main memory, 13: capturing instruction, 15: display controller, 19: timer, 20: camera, 20a: captured image, 30: operation display device, 31: display, 32: touch panel, 41: conveyor belt, 42: workpiece, 44: sensor, 50: server, 70: USB memory, 71: security countermeasure program, 72: antivirus program, 73: virus removing program, 74: pattern file, 75: falsification detection program, 101: error, 111: object inspection unit, 112, 52: linkage unit, 113: display controller, 114: transfer unit, 115: security inspection unit, 120: target inspection file, 121: security inspection file, 131: system program, 132a: scheduler, 133: target inspection information, 134: security inspection information, 135: object inspection program, 135a: model image, 136: transfer program, 137, 513: linkage program, 140: display control program, 141: application program, 441: trigger, 1111: pattern matching unit, 1112: evaluation unit, 1321: raw image data, 1322: processed image data, 1331, 1341, T1, T2, T3, T4: time, 1334: result, 1346: security inspection result, 138: inspection information DB, NW1, NW2: network

## Claims

1. An inspection device (10) that inspects an object, the inspection device comprising:
an object inspection unit (111) configured to inspect the object by executing an inspection program;
a storage (13) configured to store various types of information (135, 138, 131) including related information (135, 135a, 138) related to an inspection of the object including the inspection program (135);
a security inspection unit (116) configured to inspect a security event that is possible to occur in the information by executing a security countermeasure program (71) on the information in the storage; and
an output unit (112, 114) configured to output target inspection information (133) including an inspection result of the object from the object inspection unit and security inspection information (134) including an inspection result of the security event from the security inspection unit in linkage with an inspection time (1331, 1341) at which each inspection is performed.

2. The inspection device according to claim 1, wherein the output unit includes a first linkage unit (112) configured to store the target inspection information and the security inspection information in linkage with each other based on an inspection time linked with each of the target inspection information and the security inspection information.

3. The inspection device according to claim 1 or 2, further comprising a communication interface (17) configured to communicate with an external information processing device (50), wherein
the output unit includes a transfer unit (114) that transfers target inspection information including an inspection result of the object from the object inspection unit and security inspection information including an inspection result of a computer virus from the security inspection unit to the external information processing device through the communication interface while linking the inspection time of each of the target inspection information and the security inspection information with each other, and
the information processing device includes a second linkage unit (52) configured to store the target inspection information and the security inspection information that are transferred by the transfer unit in linkage with each other based on an inspection time linked with each of the target inspection information and the security inspection information.

4. The inspection device according to claim 2 or 3, wherein in the linkage, at least one piece of the target inspection information linked with an inspection time corresponding to a predetermined period going back from an inspection time linked with the security inspection information is linked with the security inspection information.

5. The inspection device according to claim 4, wherein the predetermined period corresponds to an interval at which the security inspection unit inspects the security event.

6. The inspection device according to any one of claims 1 to 5, wherein the security countermeasure program is stored in a storage medium (70) detachably attached to the inspection device.

7. The inspection device according to any one of claims 1 to 6, wherein the inspection device outputs a plurality of pieces of linkage information including the target inspection information and the security inspection information linked with the target inspection information based on the inspection time in time series according to at least one of the inspection times (1331, 1341) of both the target inspection information and the security inspection information.

8. The inspection device according to any one of claims 1 to 7, wherein
the security countermeasure program includes a program (73) that performs processing corresponding to the security event, and
the security inspection unit executes the program (73) that performs the processing corresponding to the security event when the security event of the information is detected.

9. The inspection device according to any one of claims 1 to 8, wherein the inspection program includes a program that inspects the object based on a captured image (20a) of the object.

10. The inspection device according to any one of claims 1 to 9, wherein the inspection device executes the security countermeasure program at a predetermined period.

11. The inspection device according to any one of claims 1 to 10, wherein the inspection device executes the security countermeasure program in parallel with the inspection program for the object during operation.

12. The inspection device according to claim 11, wherein a priority of execution of the inspection program for the object is higher than a priority of execution of the security countermeasure program.

13. A method for inspecting an object, the method comprising:
executing an inspection program (135) that inspects the object;
executing a security countermeasure program (71) that inspects a security event that is possible to occur in information stored in a storage unit (13) storing various types of information (131, 135, 135a, 138) including related information (135, 135a, 138) related to inspection of the object including the inspection program (135); and
outputting target inspection information (133) including an inspection result of the object and security inspection information (134) including an inspection result of a security event of the information in linkage with an inspection time (1331, 1342) at which each inspection is performed.

14. A program that causes, when executed by at least one processor, the at least one processor to perform:
executing an inspection program that inspects an object;
executing a security countermeasure program (71) that inspects a security event that is possible to occur in information stored in a storage unit (13) storing various types of information (131, 135, 135a, 138) including related information (135, 135a, 138) related to inspection of the object including the inspection program (135); and
outputting target inspection information (133) including an inspection result of the object and security inspection information (134) including an inspection result of a security event of the information in linkage with an inspection time (1331, 1341) at which each inspection is performed.

## Patentansprüche

1. Prüfvorrichtung (10), die einen Gegenstand prüft, wobei die Prüfvorrichtung Folgendes umfasst:
eine Gegenstandsprüfeinheit (111), die ausgelegt ist, um den Gegenstand durch Ausführen eines Prüfprogramms zu prüfen;
einen Speicher (13), der ausgelegt ist, um verschiedene Informationstypen (135, 138, 131), umfassend zugehörige Informationen (135, 135a, 138) in Bezug auf eine Prüfung des Gegenstands, umfassend das Prüfprogramm (135), zu speichern;
eine Sicherheitsprüfeinheit (116), die ausgelegt ist, um ein Sicherheitsereignis, das möglicherweise in den Informationen auftritt, durch Ausführen eines Sicherheitsgegenmaßnahmenprogramms (71) an den Informationen in dem Speicher zu prüfen; und
eine Ausgabeeinheit (112, 114), die ausgelegt ist, um Zielprüfinformationen (133), umfassend ein Prüfergebnis des Gegenstands, von der Gegenstandsprüfeinheit und Sicherheitsprüfinformationen (134), umfassend ein Prüfergebnis des Sicherheitsereignisses von der Sicherheitsprüfeinheit in Verknüpfung mit einer Prüfzeit (1331, 1341), zu der jede Prüfung durchgeführt wird, auszugeben.

2. Prüfvorrichtung nach Anspruch 1, wobei die Ausgabeeinheit eine erste Verknüpfungseinheit (112) umfasst, die ausgelegt ist, um die Zielprüfinformationen und die Sicherheitsprüfinformationen in Verknüpfung miteinander basierend auf einer Prüfzeit, die mit jeden aus den Zielprüfinformationen und den Sicherheitsprüfinformationen verknüpft ist, zu speichern.

3. Prüfvorrichtung nach Anspruch 1 oder 2, ferner umfassend eine Kommunikationsschnittstelle (17), die ausgelegt ist, um mit einer externen Informationsverarbeitungsvorrichtung (50) zu kommunizieren, wobei
die Ausgabeeinheit eine Transfereinheit (114) umfasst, die Zielprüfinformationen, umfassend ein Prüfergebnis des Gegenstands von der Gegenstandsprüfeinheit und Sicherheitsprüfinformationen, umfassend ein Prüfergebnis eines Computervirus von der Sicherheitsprüfeinheit, durch die Kommunikationsschnittstelle an die externe Informationsverarbeitungsvorrichtung zu transferieren, während die Prüfzeit von jeden aus den Zielprüfinformationen und den Sicherheitsprüfinformationen miteinander verknüpft wird, und
die Informationsverarbeitungsvorrichtung eine zweite Verknüpfungseinheit (52) umfasst, die ausgelegt ist, um die Zielprüfinformationen und die Sicherheitsprüfinformationen, die durch die Transfereinheit in Verknüpfung miteinander basierend auf einer Prüfzeit, die mit jeden aus den Zielprüfinformationen und den Sicherheitsprüfinformationen verknüpft ist, transferiert werden, zu speichern.

4. Prüfvorrichtung nach Anspruch 2 oder 3, wobei zumindest ein Element der Zielprüfinformationen in der Verknüpfung, die mit einer Prüfzeit entsprechend einer vorbestimmten Zeitspanne verknüpft sind, der einer Prüfzeit vorangeht, die mit den Sicherheitsprüfinformationen verknüpft ist, mit den Sicherheitsprüfinformationen verknüpft ist.

5. Prüfvorrichtung nach Anspruch 4, wobei die vorbestimmte Zeitspanne einem Intervall entspricht, bei dem die Sicherheitsprüfeinheit das Sicherheitsereignis prüft.

6. Prüfvorrichtung nach einem der Ansprüche 1 bis 5, wobei das Sicherheitsgegenmaßnahmenprogramm in einem Speichermedium (70) gespeichert ist, das abnehmbar an der Prüfvorrichtung angebracht ist.

7. Prüfvorrichtung nach einem der Ansprüche 1 bis 6, wobei die Prüfvorrichtung eine Vielzahl von Elementen von Verknüpfungsinformationen, umfassend die Zielprüfinformationen und die Sicherheitsprüfinformationen, die mit den Zielprüfinformationen basierend auf der Prüfzeit verknüpft sind, in Zeitreihen gemäß zumindest einer der Prüfzeiten (1331, 1341) der Zielprüfinformationen sowie der Sicherheitsprüfinformationen ausgibt.

8. Prüfvorrichtung nach einem der Ansprüche 1 bis 7, wobei das Sicherheitsgegenmaßnahmenprogramm ein Programm (73) umfasst, das eine Verarbeitung entsprechend dem Sicherheitsereignis durchführt, und
wobei die Sicherheitsprüfeinheit das Programm (73), das die Verarbeitung durchführt, entsprechend dem Sicherheitsereignis ausführt, wenn das Sicherheitsereignis der Informationen detektiert wird.

9. Prüfvorrichtung nach einem der Ansprüche 1 bis 8, wobei das Prüfprogramm ein Programm umfasst, das den Gegenstand basierend auf einem aufgenommenen Bild (20a) des Gegenstands prüft.

10. Prüfvorrichtung nach einem der Ansprüche 1 bis 9, wobei die Prüfvorrichtung das Sicherheitsgegenmaßnahmenprogramm zu einer bestimmten Zeitspanne ausführt.

11. Prüfvorrichtung nach einem der Ansprüche 1 bis 10, wobei die Prüfvorrichtung das Sicherheitsgegenmaßnahmenprogramm parallel mit dem Prüfprogramm für den Gegenstand während des Betriebs ausführt.

12. Prüfvorrichtung nach Anspruch 11, wobei eine Priorität der Ausführung des Prüfprogramms für den Gegenstand höher ist als eine Priorität der Ausführung des Sicherheitsgegenmaßnahmenprogramms.

13. Verfahren zum Prüfen eines Gegenstands, wobei das Verfahren Folgendes umfasst:
Ausführen eines Prüfprogramms (135), das den Gegenstand prüft;
Ausführen eines Sicherheitsgegenmaßnahmenprogramms (71), das ein Sicherheitsereignis prüft, das möglicherweise in Informationen auftritt, die in einer Speichereinheit (13) gespeichert sind, die verschiedene Informationstypen (131, 135, 135a, 138), umfassend zugehörige Informationen (135, 135a, 138) in Bezug auf eine Prüfung des Gegenstands, umfassend das Prüfprogramm (135), speichert; und
Ausgeben von Zielprüfinformationen (133), umfassend ein Prüfergebnis des Gegenstands, und von Sicherheitsprüfinformationen (134), umfassend ein Prüfergebnis des Sicherheitsereignisses der Informationen in Verknüpfung mit einer Prüfzeit (1331, 1341), zu der jede Prüfung durchgeführt wird.

14. Programm, das, wenn es durch zumindest einen Prozessor ausgeführt wird, bewirkt, dass der zumindest eine Prozessor Folgendes durchführt:
Ausführen eines Prüfprogramms, das den Gegenstand prüft;
Ausführen eines Sicherheitsgegenmaßnahmenprogramms (71), das ein Sicherheitsereignis prüft, das möglicherweise in Informationen auftritt, die in einer Speichereinheit (13) gespeichert sind, die verschiedene Informationstypen (131, 135, 135a, 138), umfassend zugehörige Informationen (135, 135a, 138) in Bezug auf eine Prüfung des Gegenstands, umfassend das Prüfprogramm (135), speichert; und
Ausgeben von Zielprüfinformationen (133), umfassend ein Prüfergebnis des Gegenstands, und von Sicherheitsprüfinformationen (134), umfassend ein Prüfergebnis eines Sicherheitsereignisses der Informationen in Verknüpfung mit einer Prüfzeit (1331, 1341), zu der jede Prüfung durchgeführt wird.

## Revendications

1. Dispositif d'inspection (10) qui inspecte un objet, le dispositif d'inspection comprenant :
une unité d'inspection d'objet (111) configurée pour inspecter l'objet en exécutant un programme d'inspection ;
une mémoire (13) configurée pour stocker divers types d'informations (135, 138, 131) incluant des informations connexes (135, 135a, 138) liées à une inspection de l'objet incluant le programme d'inspection (135) ;
une unité d'inspection de sécurité (116) configurée pour inspecter un événement de sécurité qui peut se produire dans les informations en exécutant un programme de contre-mesure de sécurité (71) sur les informations dans la mémoire ; et
une unité de sortie (112, 114) configurée pour délivrer en sortie des informations d'inspection de cible (133) incluant un résultat d'inspection de l'objet provenant de l'unité d'inspection d'objet et des informations d'inspection de sécurité (134) incluant un résultat d'inspection de l'événement de sécurité provenant de l'unité d'inspection de sécurité en liaison avec un temps d'inspection (1331, 1341) auquel chaque inspection est effectuée.

2. Dispositif d'inspection selon la revendication 1, dans lequel l'unité de sortie inclut une première unité de liaison (112) configurée pour stocker les informations d'inspection de cible et les informations d'inspection de sécurité en liaison les unes avec les autres sur la base d'un temps d'inspection lié à chacune des informations d'inspection de cible et des informations d'inspection de sécurité.

3. Dispositif d'inspection selon la revendication 1 ou 2, comprenant en outre une interface de communication (17) configurée pour communiquer avec un dispositif de traitement d'informations externe (50), dans lequel
l'unité de sortie inclut une unité de transfert (114) qui transfère des informations d'inspection de cible, incluant un résultat d'inspection de l'objet, depuis l'unité d'inspection d'objet et des informations d'inspection de sécurité, incluant un résultat d'inspection d'un virus informatique, depuis l'unité d'inspection de sécurité vers le dispositif de traitement d'informations externe via l'interface de communication tout en reliant le temps d'inspection de chacune des informations d'inspection de cible et des informations d'inspection de sécurité les uns avec les autres, et
le dispositif de traitement d'informations inclut une seconde unité de liaison (52) configurée pour stocker les informations d'inspection de cible et les informations d'inspection de sécurité qui sont transférées par l'unité de transfert en liaison les unes avec les autres sur la base d'un temps d'inspection lié à chacune des informations d'inspection de cible et des informations d'inspection de sécurité.

4. Dispositif d'inspection selon la revendication 2 ou 3, dans lequel dans la liaison, au moins une partie des informations d'inspection cible liées à un temps d'inspection correspondant à une période prédéterminée en arrière à partir d'un temps d'inspection lié aux informations d'inspection de sécurité, est liée aux informations d'inspection de sécurité.

5. Dispositif d'inspection selon la revendication 4, dans lequel la période prédéterminée correspond à un intervalle auquel l'unité d'inspection de sécurité inspecte l'événement de sécurité.

6. Dispositif d'inspection selon l'une quelconque des revendications 1 à 5, dans lequel le programme de contre-mesure de sécurité est stocké dans un support de stockage (70) fixé de manière amovible au dispositif d'inspection.

7. Dispositif d'inspection selon l'une quelconque des revendications 1 à 6, dans lequel le dispositif d'inspection délivre en sortie une pluralité d'informations de liaison incluant les informations d'inspection de cible et les informations d'inspection de sécurité liées aux informations d'inspection de cible sur la base du temps d'inspection dans une série temporelle selon au moins un des temps d'inspection (1331, 1341) des informations d'inspection de cible et des informations d'inspection de sécurité.

8. Dispositif d'inspection selon l'une quelconque des revendications 1 à 7, dans lequel
le programme de contre-mesure de sécurité inclut un programme (73) qui effectue un traitement correspondant à l'événement de sécurité, et
l'unité d'inspection de sécurité exécute le programme (73) qui exécute le traitement correspondant à l'événement de sécurité lorsque l'événement de sécurité des informations est détecté.

9. Dispositif d'inspection selon l'une quelconque des revendications 1 à 8, dans lequel le programme d'inspection inclut un programme qui inspecte l'objet sur la base d'une image capturée (20a) de l'objet.

10. Dispositif d'inspection selon l'une quelconque des revendications 1 à 9, dans lequel le dispositif d'inspection exécute le programme de contre-mesure de sécurité à une période prédéterminée.

11. Dispositif d'inspection selon l'une quelconque des revendications 1 à 10, dans lequel le dispositif d'inspection exécute le programme de contre-mesure de sécurité en parallèle avec le programme d'inspection pour l'objet pendant le fonctionnement.

12. Dispositif d'inspection selon la revendication 11, dans lequel une priorité d'exécution du programme d'inspection pour l'objet est supérieure à une priorité d'exécution du programme de contre-mesure de sécurité.

13. Procédé d'inspection d'un objet, le procédé comprenant les étapes consistant à :
exécuter un programme d'inspection (135) qui inspecte l'objet ;
exécuter un programme de contre-mesure de sécurité (71) qui inspecte un événement de sécurité qui peut se produire dans des informations stockées dans une unité de stockage (13) stockant divers types d'informations (131, 135, 135a, 138) incluant des informations connexes (135, 135a, 138) liées à l'inspection de l'objet, incluant le programme d'inspection (135) ; et
délivrer en sortie des informations d'inspection de cible (133) incluant un résultat d'inspection de l'objet et des informations d'inspection de sécurité (134) incluant un résultat d'inspection d'un événement de sécurité des informations en liaison avec un temps d'inspection (1331, 1342) auquel chaque inspection est effectuée.

14. Programme qui amène, lorsqu'il est exécuté par au moins un processeur, le au moins un processeur à réaliser les étapes consistant à :
exécuter un programme d'inspection qui inspecte un objet ;
exécuter un programme de contre-mesure de sécurité (71) qui inspecte un événement de sécurité qui peut se produire dans des informations stockées dans une unité de stockage (13) stockant divers types d'informations (131, 135, 135a, 138) incluant des informations connexes (135, 135a, 138) liées à l'inspection de l'objet, incluant le programme d'inspection (135) ; et
délivrer en sortie des informations d'inspection de cible (133) incluant un résultat d'inspection de l'objet et des informations d'inspection de sécurité (134) incluant un résultat d'inspection d'un événement de sécurité des informations en liaison avec un temps d'inspection (1331, 1341) auquel chaque inspection est effectuée.
